# EUROPEAN PATENT SPECIFICATION

(11) **EP 3 652 233 B1**
(45) Date of publication and mention of the grant of the patent: **24.07.2024**
(21) Application number: 18737267.7
(22) Date of filing: 05.07.2018
(51) Int. Cl.: C08G 59/50, C08G 59/56, C08J 5/24

(54) **IMPROVEMENTS IN RESIN CURATIVE SYSTEMS**
VERBESSERUNGEN AN HÄRTER-SYSTEME
AMÉLIORATION DE DURCISSEURS DE RÉSINE

(30) Priority: 12.07.2017 GB 201711192
(43) Date of publication of application: 20.05.2020
(73) Proprietor: Hexcel Composites Limited, Duxford, Cambridgeshire CB22 4QB (GB)
(72) Inventor: SIMMONS, Martin, Duxford Cambs CB22 4QB (GB); MORTIMER, Steve, Duxford Cambs CB22 4QB (GB); PATEL, Neal, Duxford Cambridgeshire CB224QB (GB)
(74) Representative: TLIP Limited
(86) International application number: PCT/EP2018/068230
(87) International publication number: WO 2019/011774

(56) References cited:
- EP-A1- 1 302 495
- EP-A1- 3 176 200
- WO-A1-2012/174989
- WO-A1-2016/063692
- US-A1- 2004 242 836
- US-A1- 2015 099 834
- US-A1- 2017 051 119

## Description

The present invention relates to curative systems for thermosetting resins and in particular to curative systems for curable epoxy resin compositions, especially for such compositions that are used in infusion processes for the production of fibre reinforced composites.

Curing agents are used in order to activate and control the curing of epoxy resins to provide the required cure cycle, the exotherm of the cure and the properties of the final cured resin. A wide range of curing agents for epoxy resins have been proposed and are widely used. For example, amines such as dicyandiamide are widely used curing agents, as are sulfones, such as diamino diphenyl sulfone.

The requirements of a curing agent for epoxy resins are that it is soluble in the epoxy resins with which it is used at temperatures involved during the cure cycle and that it is easily mixed with the epoxy resin to provide a uniform dispersion of the curing agent throughout the resin. Additionally the curing agent should be activatable to provide the desired time/temperature cure cycle for the fibre/epoxy resin system, particularly to provide fast cure but with a low enthalpy of the curing reaction. Furthermore the curing agent should be compatible with other additives that may be included in the system.

One particular class of curing agents are substituted 4,4' methylene bis anilines, such as those that are described in US 4,950,792, US4,978,791, EP2542610 and GB2524873. EP 3176200 A1 discloses a two-pack type epoxy resin composition for a fiber-reinforced composite material, including the following components (A) to (C), the epoxy resin composition having: an epoxy base resin liquid containing 30 mass% or more and 100 mass% or less of a component (A) and a curing agent liquid containing a component (B).

Fibre reinforced composites are used as structural materials in many applications, such as aerospace and automotive components, wind turbine components such as blades, sporting goods such as skis and in the electronics, construction and furniture industries. Fibre reinforced composites generally comprise a fibrous material embedded in a solid matrix of a polymeric material. The polymeric material may be a thermoplastic or a thermosetting resin. The present invention is concerned with curatives for thermosetting resins particularly those resins that are used in the production of fibre reinforced composites and in particular to curatives for epoxy resins as indicated in the claims.

Fibre reinforced composites that are based on thermosetting resins are typically produced employing one of two basic processes. In one process a material known as a prepreg is formed by impregnating a layer of fibrous material which may be woven or nonwoven unidirectional or multidirectional with an uncured or partially cured liquid resin. The prepreg is then shaped as required for the finished article and the resin cured, usually by heat to form the high strength light weight finished product. The resins used in these systems are typically epoxy resins, ester resins or maleimide resins and the resin formulation usually contains a curative for the particular resin.

In an alternative manufacturing technique a fibrous material is laid up, generally within an enclosure, into which a liquid resin system can be infused to envelope the fibrous material, where it may then be cured to produce the finished article. The enclosure may be complete around the fibrous material and the resin drawn in under vacuum (sometimes known as the vacuum bag technique). Alternatively the enclosure may be a mould, and the resin may be injected into the mould (sometimes known as Resin Transfer Moulding), which may also be vacuum assisted (known as Vacuum Assisted Resin Transfer Moulding). As with the earlier described system in relation to prepregs, the liquid resin system may be an epoxy resin, an ester resin or a maleimide resin, and it will also contain a curative for the particular resin.

Due to the economics of manufacture and also the increase in the size of the mouldings that are being produced the use of the infusion techniques is growing in popularity, and such techniques are used particularly for the manufacture of automotive and aerospace components and wind turbine blades. The liquid infusion processes advantageously allow composites to be formed with reduced manufacturing costs due to the material being cured in an out of autoclave process. It is, however, critical that the components and blades have particular strengths in tension and in compression. Furthermore, given the uses to which the composites are put, it is also important that they retain a particular strength at locations where holes may be formed for attachments.

Various tests have been developed to assess the strength of fibre reinforced composite material, one of which is known as the open hole compression test, which is the test adopted as the standard test for locations where holes have been formed in the composites, such as for securing attachments. This test is widely used, particularly the aerospace industry, to judge the acceptability of materials, and is the ACEMA standard pr EN 6036. It has been found that curative systems, particularly epoxy resins, that provide satisfactory performance in this test when the first described prepreg manufacturing process is used, may result is reduced performance when used as the curative system in the second, infusion, processes.

The Tg of composites is also an important property, both when the composite is dry, and, perhaps more importantly, when it is wet, and this can be determined using test AECMA standard pr EN 6032. The wet Tg being obtained by measurement after immersing the sample in boiling water (100°C) for 3 days prior to test. Attempts to improve open hole compression performance may result in a reduction in the glass transition temperature (Tg), particularly wet Tg, of materials.

Amines have been used as curatives for resins such as epoxy resins for many years. For example, aromatic amines and their use as curatives is described in EP1265940, which refers to a dimethylthiotolunediamine (available as Ethacure 300 from Albermarle) as being useful as a curative for polyurethane-ureas and polyureas, and this material is also listed as a possible curative for epoxy resins in vacuum bag infusion processes for the production of fibre reinforced composites in US 9,370,902.

Methylene bridged aromatic diamines, such as 4,4' methylene bis anilines, have been proposed as curative for epoxy resins, optionally in infusion processes previously described in, for example, UK Patent Application GB2524873.

The present invention aims to address or alleviate any one of the aforementioned problems and/or to provide improvements generally.

According to the invention there is provided a curative system, a use, a curable epoxy resin composition, a use of a composition, a fibre reinforced composite and a process as defined in any one of the accompanying claims.

The present invention therefore provides a curative system for epoxy resins comprising an alkyl benzene diamine and an additional aromatic amine.

The present invention also provides the use of an alkyl benzene diamine to enhance the performance of an aromatic amine as a curative for an epoxy resin in an infusion processes for the production of fibre reinforced composites.

The present invention further provides a curable epoxy resin composition containing a mixture of an epoxy resin and a curative system according to the present invention.

The present invention further provides the use of a composition according to the present invention as the curable resin in the production of fibre reinforced composites, particularly in the production of fibre reinforced composites by infusion processes.

The present invention further provides a fibre reinforced composite comprising fibrous reinforcement material and a cured epoxy resin obtainable by curing a curable epoxy resin composition according to the present invention.

The present invention yet further provides a process for the production of fibre reinforced composites wherein a fibrous reinforcement material is laid up and a curable epoxy resin composition according to the present invention is infused through the fibrous reinforcement material at a temperature of 80 to 130°C and, once the resin has been drawn through the fibrous reinforcement material, the temperature is raised to 150 to 190°C.

The curative systems of the present invention may be provided as a mixture of the alkyl benzene diamine and the additional aromatic amine, or the alkyl benzene diamine and the additional aromatic amine may be provided separately. For example, the alkyl benzene diamine may be added to an epoxy resin and mixed therein, and the additional aromatic amine may subsequently added to the mixture, or vice versa.

Compounds of formula I for use in the present invention include: 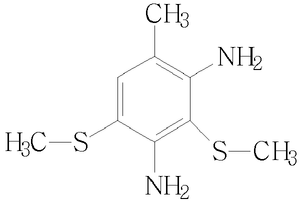 and

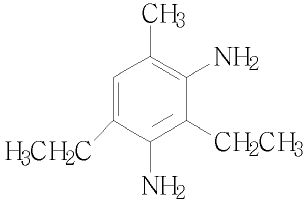

Compounds of formula II for use in the present invention include: 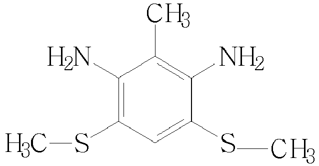 and

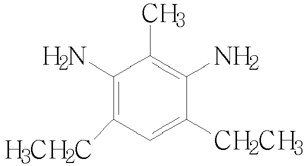

The alkyl benzene diamine comprises a mixture of compounds of formula I and formula II, preferably wherein the ratio of compounds of formula I to compounds of formula II is 90:10 to 70:30, more preferably 80:20. For example, the alkyl benzene diamine may comprise a mixture of: 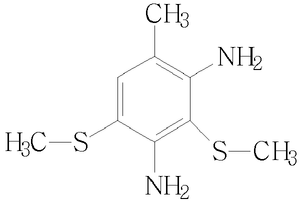 and 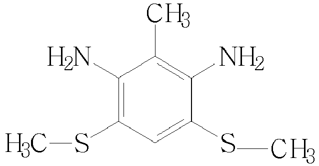 , preferably in a ratio of from 90% to 10% to 70% to 30%, more preferably in a ratio of 80% to 20%.

Examples of alkyl benzene diamines suitable for use in the present invention include Ethacure^{®} 100 and Ethacure^{®} 300, both available from Albemarle Corporation (NY, USA), and Lonzacure DETDA 80, available from Lonza (Basel, Switzerland).

The additional aromatic amines comprise methylene bis (diethyl aniline) (M-DEA), methylene (methyl ethyl aniline)-(chlorodiethyl aniline) (M-MEACDEA) or mixtures thereof, and particularly 4,4' M-DEA, 4,4' M-MEACDEA, or mixtures thereof.

A range of suitable alkylene bridged aromatic amines are available commercially, for example the methylene bis anilines available under the name Lonzacure^{®} from Lonza. Details of further suitable alkylene bridged aromatic amines are provided in WO 2011/107796 and GB 2524873.

The curative systems of the present invention preferably comprise from 5 to 50% by weight of the curative system of the alkyl benzene diamine, more preferably from 10 to 50%, most preferably from 20 to 40 wt%, with the remainder of the curative system being made up of the additional aromatic amine.

In preferred embodiments of the present invention at least one of the alkyl benzene diamine and the additional aromatic amine is liquid at ambient temperature. In particularly preferred embodiments of the invention a mixture of the alkyl benzene diamine and the additional aromatic amine (at the proportions at which they are used in the curative system) is liquid at ambient temperature, such as at 22°C.

We have now found that the use of alkyl benzene diamines, such as dimethylthiotoluenediamine, enhances the performance of and aromatic amine as curatives for epoxy resins in infusion processes for the production of fibre reinforced composites results. In particular, the use of the alkyl benzene diamine in combination with an additional aromatic amine as the curative system for an epoxy resin used in an infusion process for producing a fibre reinforced composite results in improved strength of the composite, and, in particular, improved performance of the cured composite in the open hole compression test. The use of the combination has also been found to not significantly reduce the wet Tg of the composites, and to lead to improvements in some cases.

In particularly preferred embodiments of the use according to the present invention, the alkyl benzene diamine is an alkyl benzene diamine as defined above and/or the aromatic amine is an additional aromatic amine as defined above.

The curable epoxy resin compositions of the present invention may comprise any suitable epoxy resins, but preferably the epoxy resin has a functionality at least 2.

The epoxy equivalent weight (EEW) of the resin is preferably in the range from 80 to 500, preferably of from 80 to 250. Suitable epoxy resins may comprise blends of two or more epoxy resins.

The epoxy resins used in the curable epoxy resin compositions of the present invention may be difunctional, trifunctional and tetrafunctional epoxy resins. Suitable difunctional resins for use in the present invention include those based on: diglycidyl ether of bisphenol F, diglycidyl ether of bisphenol A (optionally brominated), diglycidyl dihydroxy naphthalene, phenol and cresol epoxy novolacs, glycidyl ethers of phenol-aldehyde adducts, glycidyl ethers of aliphatic diols, diglycidyl ether, diethylene glycol digicidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Suitable trifunctional epoxy resins for use in the present invention include those based upon phenol and cresol epoxy novolacs, glycidyl ethers of phenol-aldehyde adducts, aromatic epoxy resins, aliphatic triglycidyl ethers, dialphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Material (Monthey, Switzerland) under the tradenames MY0500 and MY0510 (triglycidyl para-aminophenol) and MY0600 and MY0610 (triglycidul meta-aminophenol).

Suitable tetrafunctional epoxy resins for use in the present invention include N,N, N,¹,N¹-tetraglycidyl-m-xylenediamine (available commercially from Mitsubishi Gas Chemical Company under the name Tetrad-X, and as Erisys GA-240 from CVC Chemicals), and N,N,N¹,N¹-tetraglycidylmethylenedianline (e.g. MY720 and MY721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The curative systems of the present invention are particularly useful with epoxy resins that are liquid at ambient temperature.

The curable epoxy resin compositions of the present invention may comprise any amount of the curative systems of the present invention sufficient to promote curing of the compositions. In preferred embodiments of the invention, the curative system and the epoxy resin are used in amounts such that the relative amounts of amine groups provided by the curative and the epoxy groups provided by the epoxy resin is from 07:1.3, preferably from 0.8:1.2.

The curable epoxy resins of the present invention may comprise additional components (or additives) according to the nature of the use envisaged for the cured epoxy resin. Suitable additives include one or more of additional resins, flexibilizers, toughening agents, rubbers, core shell polymers, fillers, flame and/or smoke retardants, wetting agents, pigments/dyes, UV absorbers, antifungal compounds and viscosity modifiers.

In order to prepare the curable epoxy resin compositions of the present invention it is necessary to produce a homogenous or substantially homogeneous mixture of the various ingredients. In particular, it is important that the curing agents be well dispersed throughout the epoxy resin in order to obtain uniform curing of the formulation upon heating so that uniform properties, particularly mechanical properties, are obtained in the cured epoxy resin. Additionally, it is desirable that the compositions can be prepared at temperatures well below the activation temperatures of the curing agents to prevent premature activation of the curing agents and cross linking of the epoxy resin. In addition, for infusion applications the viscosity of the compositions suitably remains low to promote impregnation of fibrous reinforcement. It is also preferred that, from an economic perspective, the compositions can be prepared at low temperatures to reduce the costs of heating the mixtures during compounding of the compositions. This is particularly relevant in resin infusion processes, where the uncured resin composition comprising the epoxy resin, curative system and, optionally, other components is suitably drawn into the reinforcing material, for example fibres or a fabric, located in a mould for the composite using a vacuum and/or pressure to draw the resin composition through a stack of the reinforcing material. The speed and distance of the infusion of the stack is dependent on the permeability of the stack, the pressure gradient acting on the infused resin and the viscosity of the resin composition.

In preferred embodiments of the present invention, the curable epoxy resin compositions of the invention have a viscosity of from 10 to 100cP at 120°C and from 100 to 1000cP 60°C.

The curable epoxy resin compositions of the present invention are especially suitable for the production of a composite by infusion processes. In an infusion process, a reinforcing material, for example a fabric or a fibrous material, may be placed in a mould and liquid resin is then drawn into the mould, for example under pressure and/or by vacuum to impregnate the reinforcing material within the mould. The reinforcing material may have been pre-shaped in the mould or may be shaped once impregnated with the resin, and the resin impregnated reinforcing material may then be cured in the mould.

We have found that the curable epoxy resin compositions of the present invention, employing the curative systems of the invention, may be used in an infusion process to prepare a composite with excellent mechanical properties, particularly in the open hole compression test, and that they also have desirable glass transition temperatures (Tg) particularly the wet glass transition temperature.

The processes of the present invention comprise laying up a fibrous reinforcement material and infusing the material with a curable epoxy resin composition of the present invention at a temperature of 80 to 130°C and, once the composition has infused the fibrous reinforcement material, raising the temperature to 150 to 190°C to cure the resin.

The fibrous reinforcement materials used in the processes of the present invention may be synthetic or natural fibres or any other form of material or combination of materials that, combined with the curable epoxy resin composition of the invention, forms a composite product. The reinforcement material can either be provided via spools of fibre that are unwound or from a roll of textile. Exemplary fibres include glass, carbon, graphite, boron, ceramic and aramid. Preferred fibres are carbon, glass, graphite, boron, ceramic and aramid fibres, particularly carbon fibres. Hybrid or mixed fibre systems may also be envisaged. The use of cracked (i.e. stretch-broken) or selectively discontinuous fibres may be advantageous to facilitate lay-up of the product and improve its capability of being shaped. Although a unidirectional fibre alignment is preferable, other forms may also be used. Typical textile forms include simple textile fabrics, knit fabrics, twill fabrics and satin weaves. It is also possible to envisage using non-woven or non-crimped fibre layers. The surface mass of fibres within the fibrous reinforcement is generally 80-2000 g/m², preferably 100-1000 g/m², and especially preferably 150-800 g/m². The number of carbon filaments per tow can vary from 1000 to 480,000, preferably from 3,000 to 24,000 and most preferably from 3,000 to 12,000.

Composite materials produced by infusion processes using the compositions of the present invention may be used for any intended purpose, but are particularly useful in automotive and aerospace vehicles, particularly in commercial and military aircraft. For example, the composite materials may be used to make non-primary (secondary) aircraft structures. However the preferred use of the composite material is for structural applications, such as primary aircraft structures. Primary aircraft structures or parts are those elements of either fixed-wing or rotary wing aircraft that undergo significant stress during flight and which are essential for the aircraft to maintain controlled flight. The composite materials may also be used for other structural applications to make load-bearing parts and structures in general, for example they may be used in wind turbine blades and sporting goods such as skis.

The invention is illustrated but in no way limited by the accompanying Examples.

### Example 1

Mouldings were produced by the resin transfer moulding technique in which twenty four plies of dry unidirectional carbon fibre fabric (UD194 IMA/V800E/ZD0/500MM, available from Hexcel Corporation) were laid up in a mould with a quasi-isotropic layup of [+45/0/-45/90]₃ₛ and infused with various resin compositions. The resin compositions comprised the functional epoxy resin commercially available as Araldite MY 721 (N,N,N',N' Tetraglycidyl -4-4 methylene bis benzamine) and various amounts of curatives to provide a stoichiometric amount of curative amine groups for the epoxy content of the Araldite MY 721. The resin compositions were injected into the mould at 110°C and cured by heating the mould to 180°C by increasing the temperature by 2°C per minute and then holding the mould at 180°C for two hours.

The curatives used were the 4,4' methylene bis aniline available from Lonza as MDEA (4,4' methylene bis (diethyl aniline)), the 4,4' methylene bis aniline available from Lonza as MCDEA (4,4' methylene bis (chlorodiethyl aniline)) (comparative) and the dimethylthiotoluenediamine isomeric mixture available from Albermarle as Ethacure 300. The amounts of the resins used are shown in Table 1.

**Table 1**

| **Composition wt%** | **IDS20** | **IDS21** | **IDS22** | **IDS23** | **IDS24** |
|---|---|---|---|---|---|
| MY721 | 57 | 58.4 | 59.7 | 62.1 | 63.2 |
| Ethacure 300 | 0 | 4.2 | 8.1 | 15.1 | 18.4 |
| MCDEA | 21.5 | 18.7 | 16.1 | 11.4 | 9.2 |
| MDEA | 21.5 | 18.7 | 16.1 | 11.4 | 9.2 |
| Proportion of Ethacure 300 to total curative | 0% | 10% | 20% | 40% | 50% |

Mouldings 420mm by 420mm by 4.5mm were produced, and the open hole compression strength of the mouldings (OHC) was determined according to AECMA standard pr EN 6036 of December 1995 and the wet glass transition temperature of the mouldings was measured according to the AECMA standard pr En 6032 of November 1995.

The results of the tests are shown in Table 2.

**Table 2**

| **Composition** | Proportion of Ethacure to total curative | **OHC (MPa)** | **Tg dry (°C)** | **Tg wet (°C)** |
|---|---|---|---|---|
| IDS20 | 0% | 267 | 185 | 162 |
| IDS21 | 10% | 291 | 186 | 163 |
| IDS22 | 20% | 307 | 186 | 162 |
| IDS23 | 40% | 303 | 200 | 171 |
| IDS24 | 50% | 305 | 204 | 173 |

As shown in Table 2, the combination of 20 wt% of an alkyl benzene diamine and 80 wt% of additional aromatic amine curative provides clear improvements in open hole compression performance compared to the use of 100 wt% of the aromatic curative. Similar advantages are also provided by the use of combinations of 40 wt% alkyl benzene diamine and 60 wt% additional aromatic amine curative and 50 wt% alkyl benzene diamine and 50 wt% additional aromatic amine curative. In addition, there is no significant decrease in either wet or dry Tg values associated with the use of the alkyl benzene diamine, and increases are provided at some concentrations.

### Example 2

The procedure of Example 1 was repeated but the mixture of MDEA and MCDEA was replaced by 4,4' methylene (methyl ethyl aniline)-(chlorodiethyl aniline) (M-MEACDEA), used in the proportions shown in Table 3.

**Table 3**

| **Composition wt%** | **IDS25** | **IDS26** | **IDS27** | **IDS28** | **IDS29** |
|---|---|---|---|---|---|
| MY721 | 57.7 | 59 | 60.2 | 62.5 | 63.5 |
| Ethacure 300 | 0 | 4.1 | 8 | 15 | 18.3 |
| M-MEACDEA | 42.3 | 36.9 | 31.9 | 22.5 | 18.3 |
| Proportion of Ethacure 300 to total curative | 0% | 10% | 20% | 40% | 50% |

Mouldings were produced and tested as in Example 1, and the results are shown in Table 4.

**Table 4**

| **Composition** | Proportion of Ethacure to total curative | **OHC (MPa)** | **Tg dry (°C)** | **Tg wet (°C)** |
|---|---|---|---|---|
| IDS25 | 0% | 283 | 209 | 181 |
| IDS26 | 10% | 286 | 212 | 189 |
| IDS27 | 20% | 302 | 208 | 190 |
| IDS28 | 40% | 297 | 208 | 190 |
| IDS29 | 50% | 291 | 214 | 190 |

As shown in Table 4, the combination of 20 wt% of an alkyl benzene diamine and 80 wt% of additional aromatic amine curative provides clear improvements in open hole compression performance compared to the use of 100 wt% of the aromatic curative. Similar advantages are also provided by the use of combinations of 40 wt% alkyl benzene diamine and 60 wt% additional aromatic amine curative and 50 wt% alkyl benzene diamine and 50 wt% additional aromatic amine curative. In addition, there is no significant decrease in either wet or dry Tg values associated with the use of the alkyl benzene diamine, and increases are provided at some concentrations.

### Example 3

A resin composition was prepared comprising a mixture of 39.19 wt% of the multifunctional epoxy resin N, N, N, N', N' tetra glycidyl -4-4methylene bis benzamine, commercially available as Araldite MY 9655 from Huntsman Advanced Materials (UK) Limited; 21.09 wt% of the multifunctional epoxy resin N,N,N',N'-tetraglycidyl-3,3'-diethyl-4,4'- methylene bis benzamine, commercially available as Araldite MY 722 from Huntsman Advanced Materials (UK) Limited; 36.72 wt% of a curative system, and 3 wt% of acrylic core shell toughening particles, commercially available as XT100 from Arkema. The curative system comprised 7.35 wt% (by weight of the total composition) of an alkyl benzene diamine, in the form of the dimethylthiotoluenediamine isomeric mixture available from Albermarle as Ethacure 300, and 29.37 wt% (by weight of the total composition) of an additional aromatic amine, in the form of 4,4' methylene (methyl ethyl aniline)-(chlorodiethyl aniline) (M-MEACDEA). The alkyl benzyl diamine comprised 20 wt% of the curative system and the additional aromatic amine comprised 80 wt% of the curative system.

The resin of Example 3 was used to prepare test laminates as set out in Example 1, except that the reinforcement used was in the form of UD210 IMA/V800E/ZD4/6.35mm. The laminates were tested as set out in Example 1, and the open hole compression performance was found to be good (302 MPa) with no significant impact on either dry or wet Tg (dry Tg 192°C, wet Tg 178°C).

### Example 4

A resin composition was prepared comprising a mixture of 38 wt% of functional epoxy resin N,N,N',N' Tetraglycidyl -4-4 methylene bis benzamine, commercially available as Araldite MY 721 from Huntsman Advanced Materials (UK) Limited; 21 wt% of the multifunctional epoxy resin N,N,N',N'-tetraglycidyl-3,3'-diethyl-4,4'- methylene bis benzamine, commercially available as Araldite MY 722 from Huntsman Advanced Materials (UK) Limited; 38 wt% of a curative system, and 3 wt% of acrylic core shell toughening particles, commercially available as XT100 from Arkema. The curative system comprised 4 wt% (by weight of the total composition) of an alkyl benzene diamine, in the form of the diethyltoluenediamine isomeric mixture available from Albermarle as Ethacure 100, and 24 wt% (by weight of the total composition) of an additional aromatic amine, in the form of 4,4' methylene (methyl ethyl aniline)-(chlorodiethyl aniline) (M-MEACDEA). The alkyl benzyl diamine comprised 10.5 wt% of the curative system and the additional aromatic amine comprised 89.5 wt% of the curative system.

The resin of Example 4 was used to prepare test laminates as set out in Example 3 using the reinforcement material listed therein. The laminates were tested as set out in Example 1, and the open hole compression performance was found to be good (295 MPa) with no significant impact on either dry or wet Tg (dry Tg 198°C, wet Tg 175°C).

## Claims

1. A curative system for epoxy resins comprising an alkyl benzene diamine and an additional aromatic amine in which the alkyl benzene diamine comprises a mixture of compounds of formula I and formula II,
in which the compound of formula I has the following structure: 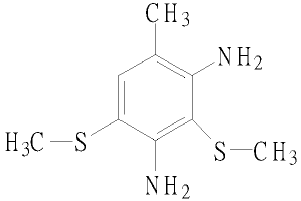 or 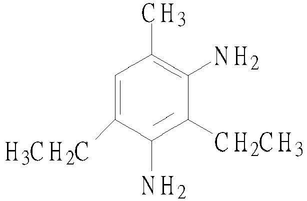
and the compound of formula II has the following structure: 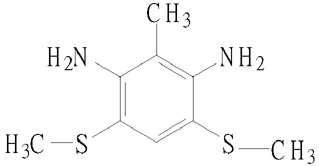 or 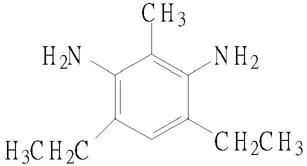
and further wherein the additional aromatic amine comprises methylene bis (diethyl aniline) (M-DEA), methylene (methylethyl aniline)-(chlorodiethyl aniline) (M-MEACDEA) or mixtures thereof.

2. A curative system according to claim 1, wherein the ratio of compounds of formula I to compounds of formula II is 90:10 to 70:30, preferably 80:20.

3. A curative system according to claim 2 in which the alkyl benzene diamine comprises a mixture of: 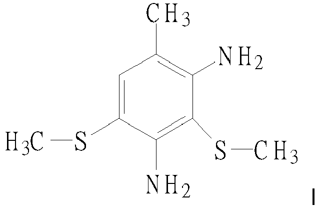 and 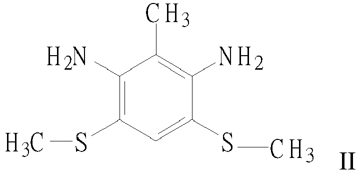 , preferably in a ratio of from 90% to 10% to 70% to 30%, more preferably in a ratio of 80% to 20%.

4. A curative system according to any of the preceding claims comprising from 5 to 50% by weight of the curative system of the alkyl benzyl diamine, preferably from 10 to 50%, more preferably from 20 to 40%.

5. A curative system according to any of the preceding claims in which a mixture of the alkyl benzene diamine and the additional aromatic amine is liquid at 22°C.

6. The use of an alkyl benzene diamine to enhance the performance of an aromatic amine as a curative for an epoxy resin in an infusion processes for the production of fibre reinforced composites, in which the alkyl benzene diamine comprises a mixture of compounds of formula I and formula II,
in which the compound of formula I has the following structure: 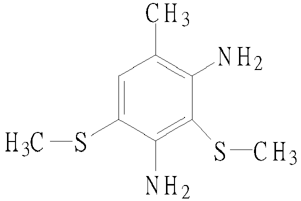 or 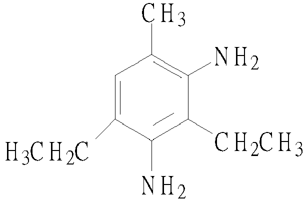
and the compound of formula II has the following structure: 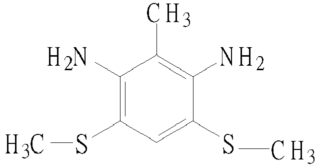 or 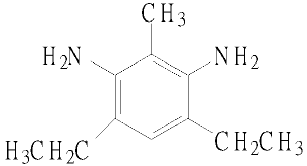
and further wherein the aromatic amine comprises methylene bis (diethyl aniline) (M-DEA), methylene (methylethyl aniline)-(chlorodiethyl aniline) (M-MEACDEA) or mixtures thereof.

7. A curable epoxy resin composition containing a mixture of an epoxy resin and a curative system according to any of claims 1 to 5; preferably in which the epoxy resin has a functionality at least 2.

8. A curable epoxy resin composition according to claim 7 in which the relative amounts of amine groups provided by the curative system and the epoxy groups provided by the epoxy resin is from 0.7:1.3, preferably from 0.8:1.2; and/or in which the composition has a viscosity of from 0.01 to 0.1 Pa.s (10 to 100cP) at 120°C and from 0.1 to 1.0 Pa.s (100 to 1000cP) at 60°C.

9. The use of a composition according to claim 7 or claim 8 as the curable resin in the production of fibre reinforced composites or in the production of fibre reinforced composites by infusion processes.

10. A fibre reinforced composite comprising fibrous reinforcement material and a cured epoxy resin obtainable by curing a curable epoxy resin composition according to claim 7 or claim 8.

11. A process for the production of fibre reinforced composites wherein a fibrous reinforcement material is laid up and a curable epoxy resin composition according to claim 7 or claim 8 is infused through the fibrous reinforcement material at a temperature of 80 to 130°C and, once the composition has infused the fibrous reinforcement material, the temperature is raised to 150 to 190°C; preferably wherein the fibrous reinforcement material is selected from glass, carbon, graphite, boron, ceramic or aramid fibres.

## Patentansprüche

1. Ein Härtungssystem für Epoxidharze, das ein Alkylbenzoldiamin und ein zusätzliches aromatisches Amin beinhaltet, wobei das Alkylbenzoldiamin eine Mischung von Verbindungen der Formel I und Formel II beinhaltet,
wobei die Verbindung der Formel I die folgende Struktur aufweist: 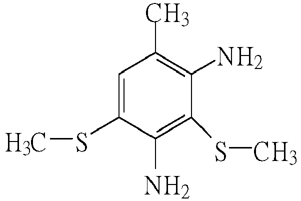 oder 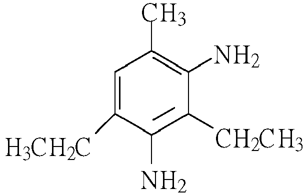
und die Verbindung der Formel II die folgende Struktur aufweist: 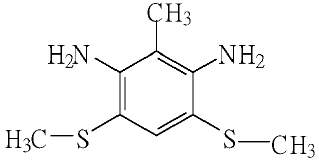 oder 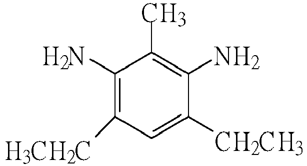
und wobei das zusätzliche aromatische Amin ferner Methylen-bis(diethylanilin) (M-DEA), Methylen(methylethylanilin)-(chlordiethylanilin) (M-MEACDEA) oder Mischungen davon beinhaltet.

2. Härtungssystem gemäß Anspruch 1, wobei das Verhältnis von Verbindungen der Formel I zu Verbindungen der Formel II 90 : 10 bis 70 : 30, vorzugsweise 80 : 20, ist.

3. Härtungssystem gemäß Anspruch 2, wobei das Alkylbenzoldiamin eine Mischung von Folgendem beinhaltet: 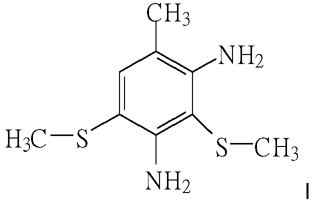 und 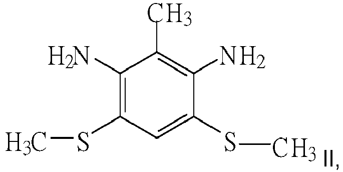 vorzugsweise in einem Verhältnis von 90 % zu 10 % bis 70 % zu 30 %, noch bevorzugter in einem Verhältnis von 80 % zu 20 %.

4. Härtungssystem gemäß einem der vorhergehenden Ansprüche, das zu 5 bis 50 Gew.-% das Härtungssystem des Alkylbenzoldiamins, vorzugsweise zu 10 bis 50 Gew.-%, noch bevorzugter 20 bis 40 Gew.-%, beinhaltet.

5. Härtungssystem gemäß einem der vorhergehenden Ansprüche, wobei eine Mischung des Alkylbenzoldiamins und des zusätzlichen aromatischen Amins bei 22 °C flüssig ist.

6. Die Verwendung eines Alkylbenzoldiamins, um die Wirksamkeit eines aromatischen Amins als ein Härtungsmittel für ein Epoxidharz in einem Infusionsvorgängen zur Produktion von faserverstärkten Verbundstoffen zu steigern, wobei das Alkylbenzoldiamin eine Mischung von Verbindungen der Formel I und Formel II beinhaltet,
wobei die Verbindung der Formel I die folgende Struktur aufweist: 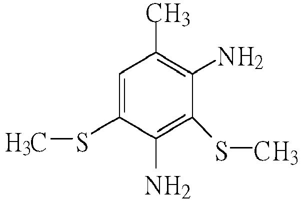 oder 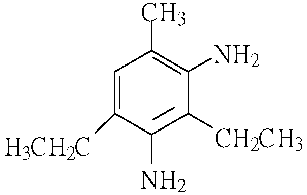
und die Verbindung der Formel II die folgende Struktur aufweist: 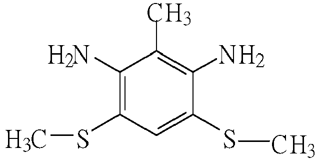 oder 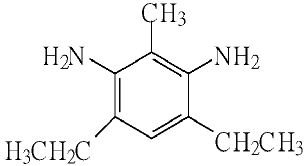
und wobei das aromatische Amin ferner Methylen-bis(diethylanilin) (M-DEA), Methylen(methylethylanilin)-(chlordiethylanilin) (M-MEACDEA) oder Mischungen davon beinhaltet.

7. Eine härtbare Epoxidharzzusammensetzung, die eine Mischung eines Epoxidharzes und eines Härtungssystems gemäß einem der Ansprüche 1 bis 5 enthält; wobei das Epoxidharz vorzugsweise eine Funktionalität von mindestens 2 aufweist.

8. Härtbare Epoxidharzzusammensetzung gemäß Anspruch 7, wobei die relativen Mengen von Amingruppen, die von dem Härtungssystem bereitgestellt werden, und der Epoxidgruppen, die von dem Epoxidharz bereitgestellt werden, von 0,7 : 1,3, vorzugsweise von 0,8 : 1,2, reichen; und/oder wobei die Zusammensetzung bei 120 °C eine Viskosität von 0,01 bis 0,1 Pa.s (10 bis 100 cP) und bei 60 °C von 0,1 bis 1,0 Pa.s (100 bis 1000 cP) aufweist.

9. Die Verwendung einer Zusammensetzung gemäß Anspruch 7 oder Anspruch 8 als das härtbare Harz in der Produktion von faserverstärkten Zusammensetzungen oder in der Produktion von faserverstärkten Zusammensetzungen durch Infusionsvorgänge.

10. Ein faserverstärkter Verbundstoff, der faseriges Verstärkungsmaterial und ein gehärtetes Epoxidharz, das durch Härten einer härtbaren Epoxidharzzusammensetzung gemäß Anspruch 7 oder Anspruch 8 erhältlich ist, beinhaltet.

11. Ein Vorgang zur Produktion von faserverstärkten Verbundstoffen, wobei ein faseriges Verstärkungsmaterial ausgelegt wird und das faserige Verstärkungsmaterial bei einer Temperatur von 80 bis 130 °C mit einer härtbaren Epoxidharzzusammensetzung gemäß Anspruch 7 oder Anspruch 8 durchtränkt wird und, sobald die Zusammensetzung das faserige Verstärkungsmaterial durchtränkt hat, die Temperatur auf 150 bis 190 °C erhöht wird; wobei das faserige Verstärkungsmaterial vorzugsweise aus Glas, Kohlenstoff, Graphit, Bor, Keramik oder Aramidfasern ausgewählt ist.

## Revendications

1. Un système durcisseur pour résines époxy comprenant une alkylbenzènediamine et une amine aromatique supplémentaire dans lequel l'alkylbenzènediamine comprend un mélange de composés de formule I et de formule II,
dans lequel le composé de formule I a la structure suivante : 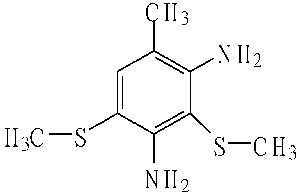 ou 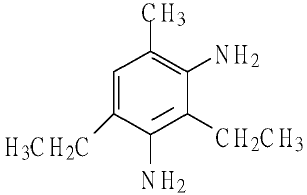
et le composé de formule II a la structure suivante : 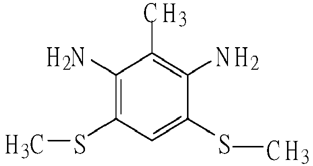 ou 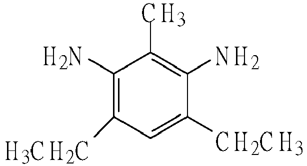
et où en outre l'amine aromatique supplémentaire comprend de la méthylène bis (diéthylaniline) (M-DEA), de la méthylène(méthyléthylaniline)-(chlorodiéthylaniline) (M-MEACDEA) ou des mélanges de celles-ci.

2. Un système durcisseur selon la revendication 1, où le rapport des composés de formule I aux composés de formule II est de 90/10 à 70/30, de préférence de 80/20.

3. Un système durcisseur selon la revendication 2 dans lequel l'alkylbenzènediamine comprend un mélange de : 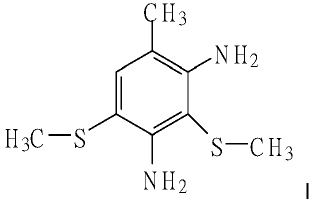 et 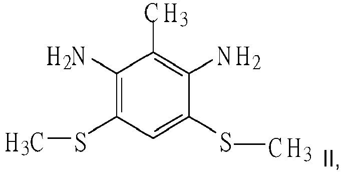 de préférence dans un rapport allant de 90 % à 10 % à 70 % à 30 %, de préférence encore dans un rapport de 80 % à 20 %.

4. Un système durcisseur selon n'importe lesquelles des revendications précédentes constitué à hauteur de 5 % à 50 % en poids du système durcisseur de l'alkylbenzènediamine, de préférence à hauteur de 10 % à 50 %, de préférence encore à hauteur de 20 % à 40 %.

5. Un système durcisseur selon n'importe lesquelles des revendications précédentes dans lequel un mélange de l'alkylbenzènediamine et de l'amine aromatique supplémentaire est liquide à 22 °C.

6. L'utilisation d'une alkylbenzènediamine afin d'améliorer la performance d'une amine aromatique comme durcisseur pour une résine époxy dans un procédés par infusion pour la production de composites renforcés par des fibres, dans laquelle l'alkylbenzènediamine comprend un mélange de composés de formule I et de formule II,
dans laquelle le composé de formule I a la structure suivante : 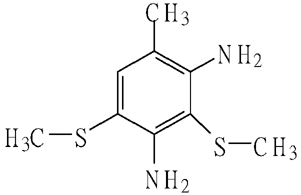 ou 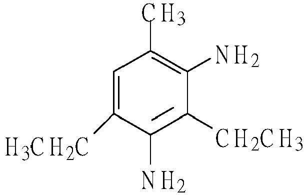
et le composé de formule II a la structure suivante : 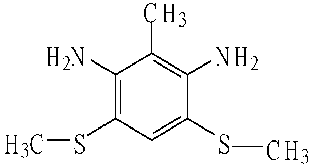 ou 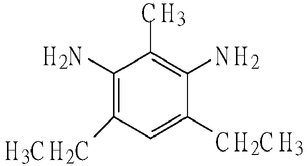
et où en outre l'amine aromatique comprend de la méthylène bis (diéthylaniline) (M-DEA), de la méthylène (méthyléthylaniline)-(chlorodiéthylaniline) (M-MEACDEA) ou des mélanges de celles-ci.

7. Une composition de résine époxy durcissable contenant un mélange d'une résine époxy et d'un système durcisseur selon n'importe lesquelles des revendications 1 à 5 ; de préférence dans laquelle la résine époxy a une fonctionnalité d'au moins 2.

8. Une composition de résine époxy durcissable selon la revendication 7 dans laquelle les quantités relatives de groupes amines apportés par le système durcisseur et des groupes époxy apportés par la résine époxy sont à partir de 0,7/1,3, de préférence à partir de 0,8/1,2 ; et/ou la composition ayant une viscosité allant de 0,01 à 0,1 Pa.s (10 à 100 cP) à 120 °C et de 0,1 à 1,0 Pa.s (100 à 1 000 cP) à 60 °C.

9. L'utilisation d'une composition selon la revendication 7 ou la revendication 8 en tant que résine durcissable dans la production de composites renforcés par des fibres ou dans la production de composites renforcés par des fibres par procédés par infusion.

10. Un composite renforcé par des fibres comprenant un matériau de renforcement fibreux et une résine époxy durcie pouvant être obtenue en durcissant une composition de résine époxy durcissable selon la revendication 7 ou la revendication 8.

11. Un procédé pour la production de composites renforcés par des fibres où un matériau de renforcement fibreux est superposé et une composition de résine époxy durcissable selon la revendication 7 ou la revendication 8 est infusée à travers le matériau de renforcement fibreux à une température de 80 °C à 130 °C et, une fois que la composition a infusé le matériau de renforcement fibreux, la température est accrue jusqu'à de 150 °C à 190 °C ; de préférence où le matériau de renforcement fibreux est sélectionné parmi le verre, le carbone, le graphite, le bore, la céramique ou les fibres aramides.
